**Europäisches Patentamt**

**European Patent Office**

**Office européen des brevets**

(19)

(11) **EP 1 496 476 A1**

(12) ## EUROPEAN PATENT APPLICATION

(43) Date of publication:
**12.01.2005 Bulletin 2005/02**

(51) Int Cl.$^7$: **G06T 15/20**

(21) Application number: **04102739.2**

(22) Date of filing: **16.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **03.07.2003 FR 0308112**

(71) Applicant: **Thomson Licensing S.A.**
**92100 Boulogne Billancourt (FR)**

(72) Inventors:
- **Francois, Edouard**
  **35890 Bourg-des-Comptes (FR)**
- **Robert, Philippe**
  **35235 Thorigne-Fouillard (FR)**

(74) Representative: **Ruellan-Lemonnier, Brigitte**
**Thomson,**
**European Patent Operations,**
**46 Quai Alphonse Le Gallo**
**92648 Boulogne Cedex (FR)**

(54) **Device and method for simulating movement in a virtual scene**

(57)     The invention relates to a device for coding two-dimensional images representing viewpoints of a three-dimensional virtual scene, a movement in this scene, simulated by the successive displaying of images, being limited according to predetermined trajectories.

In accordance with the invention, the device is characterized in that it comprises means for coding a trajectory with the aid of a graph (300) of successive nodes $N_i$ such that with each node $N_i$ is associated at least one two-dimensional source and one transformation of this image.

FIG_3

EP 1 496 476 A1

## Description

The present invention relates to a device, to a system and to a method of coding digital images, in particular for simulating a movement in a three-dimensional virtual scene.

Numerous applications, such as video games, on-line sales or property simulations, require the generation of two-dimensional digital images displayed in succession on a screen so as to simulate a movement in a three-dimensional virtual scene that may correspond, according to some of the examples previously cited, to a shop or to an apartment.

Stated otherwise, the two-dimensional images displayed on the screen vary as a function of the movements desired by a user in the three-dimensional virtual scene, each new image displayed corresponding to a new viewpoint of the scene in accordance with the movement made.

To generate these two-dimensional images, it is known to code all of the possible viewpoints of the three-dimensional scene, for example by means of polygons, each facet of a polygon coding a part of the scene according to a given viewpoint.

When the user wishes to simulate a movement in the scene, the image displayed is then generated by choosing the appropriate facet(s) of the polygons representing the parts of the scene that are relevant to the required viewpoint and then by projecting the images coded by this (or these) facet(s) onto the screen.

Such a method has the drawback of requiring a graphical map at the level of the device used to generate the images since the operations performed to generate this image are numerous and complex, thereby increasing the cost and the complexity of this method. Moreover, the quantity of data that has to be stored and processed in order to generate an image is particularly significant since it corresponds to the information necessary for coding a scene according to all of these possible viewpoints.

Furthermore, it is also known to simulate a movement in a two-dimensional scene by means of two-dimensional images, hereinafter dubbed source images, such that a source image can be used to generate various displayed images.

Accordingly, the dimensions of a source image are greater than those of an image displayed such that, by modifying the zone of the source image used to generate a displayed image and possibly by applying transformations to the relevant zones of the source image, it is possible to generate various two-dimensional images.

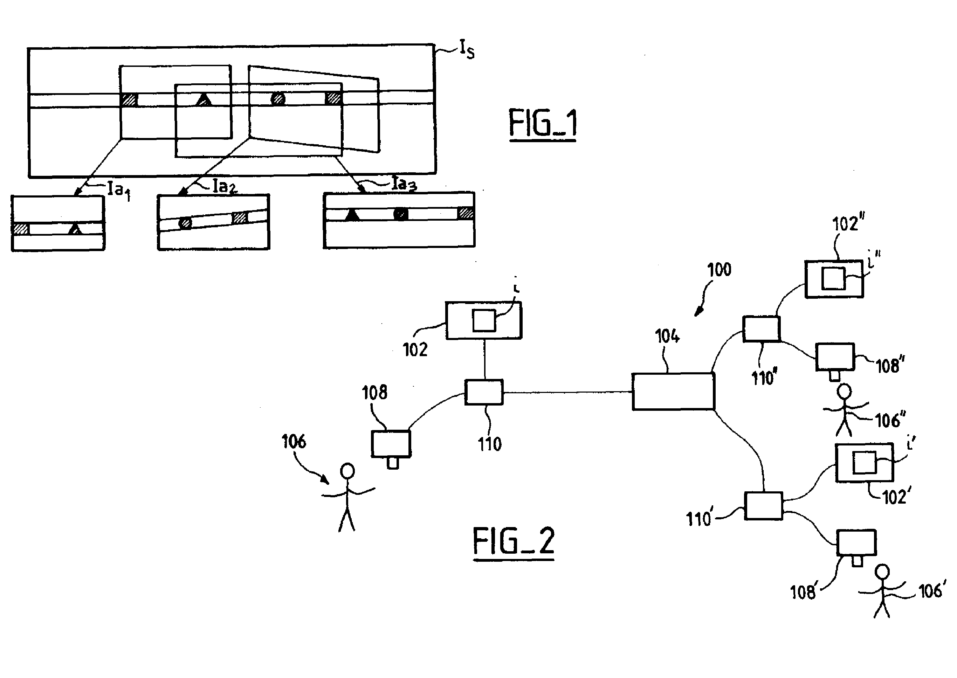

An example of using a source image is represented in figure 1 where three images $I_{a1}$, $I_{a2}$ and $I_{a3}$ are generated on the basis of a single source image $I_s$.

Such a use is implemented in the MPEG-4 standard (Motion Picture Expert Group), as described for example in the document ISO/IEC JTC 1/SC 29/WG 11 N 2502, pages 189 to 195.

The present invention results from the finding that, in numerous applications simulating a movement in a three-dimensional scene or environment, the movements simulated are made according to predefined trajectories.

For example, the movements accessible to a user within the framework of an on-line sale (respectively of a property project) are limited to the shelves of the shop making this sale (respectively limited to the rooms of the apartment or of the house concerned in the property project).

It is for this reason that the invention relates to a device for coding two-dimensional images representing viewpoints of a three-dimensional virtual scene, a movement in this scene, simulated by the successive displaying of images, being limited according to predetermined trajectories, characterized in that it comprises means for coding a trajectory with the aid of a graph of successive nodes such that with each node is associated at least one two-dimensional source image and one transformation of this source image making it possible to generate an image to be displayed.

By virtue of the invention, the simulation of a movement in a three-dimensional scene is performed with the aid of two-dimensional source images without it being necessary to use a graphical map to process codings in three dimensions.

Consequently, the coding and the processing of images according to the invention are less expensive and simpler to implement.

Furthermore, the databases required to generate the images are less significant than when three-dimensional data are coded since the coding of the image according to viewpoints that are not accessible to the user is not considered.

In one embodiment, the device comprises means for coding an image to be displayed with the aid of a mask associated with a source image, for example a binary mask, and/or with the aid of polygons, the mask identifying for each pixel of the image to be displayed the source image $I_{s,i}$ on the basis of which it is to be constructed.

According to one embodiment, the device comprises means for coding a list relating to the source images and to the transformations of these source images for successive nodes in the form of a binary train.

According to one embodiment, the device comprises means for ordering in the list the source images generating an image from the most distant, that is to say generating a part of the image appearing as furthest away from the user, to the closest source image, that is to say generating the part of the image appearing as closest to the user.

According to one embodiment, the device comprises means for receiving a command determining a node to be considered from among a plurality of nodes when several trajectories, defined by these nodes, are possible.

According to one embodiment, the device comprises means for generating the source images according to a stream of video images of MPEG-4 type.

In one embodiment, the device comprises means for generating the source images on the basis of a three-dimensional coding by projecting, with the aid of an affine and/or linear homographic relation, the three-dimensional coding onto the plane of the image to be displayed.

According to one embodiment, the device comprises means for considering the parameters of the camera simulating the shot.

In one embodiment, the device comprises means for evaluating an error of projection of the three-dimensional coding in such a way that the linear (respectively affine) projection is performed when the deviation between this projection and the affine (respectively homographic) projection is less than this error.

According to one embodiment, the device comprises means for grouping together the source images generated by determining, for each source image associated with an image to be displayed, the adjacent source images which may be integrated with it by verifying whether the error produced by applying the parameters of the source image to these adjacent images is less than a threshold over all the pixels concerned, or else over a minimum percentage.

The invention also relates to a system for simulating movements in a three-dimensional virtual scene comprising an image display device, this system comprising a display screen and control means allowing a user to control a movement according to a trajectory from among a limited plurality of predefined trajectories, this system being characterized in that it comprises a device according to one of the preceding embodiments.

In one embodiment, the system comprises means for automatically performing the blanking out of a part of a source image that is remote with respect to the user with another closer source image.

According to one embodiment, the system comprises means for generating a pixel of the image to be displayed in a successive manner on the basis of several source images, each new value of the pixel replacing the values previously calculated.

Finally, the invention also relates to a method of simulating movements in a three-dimensional virtual scene using an image display device, a display screen and control means allowing a user to control a movement according to a trajectory from among a limited plurality of predefined trajectories, this method being characterized in that it comprises a device according to one of the preceding embodiments.

Other characteristics and advantages of the invention will become apparent with the description given hereinbelow, by way of nonlimiting example, of embodiments of the invention making reference to the appended figures in which:

Figure 1, already described, represents the use of a source image to generate two-dimensional images,

Figure 2 represents a system in accordance with the invention using a telecommunication network,

Figure 3 is a diagram of the coding of a three-dimensional virtual scene according to the invention,

Figures 4 and 5 are diagrams of data transmissions in a system in accordance with the invention, and

Figure 6 represents the generation of an image to be displayed in a system in accordance with the invention using the MPEG-4 standard.

A system 100 (Figure 2) in accordance with the invention comprises a device 104 for coding two-dimensional images.

The images coded represent viewpoints of a three-dimensional virtual scene. In practice, in this example it is considered that this scene corresponds to an apartment comprising several rooms.

The movements through this apartment, simulated by the successive displaying of images, are limited according to predetermined trajectories which correspond to the displacements from a first room to a second room neighbouring the first.

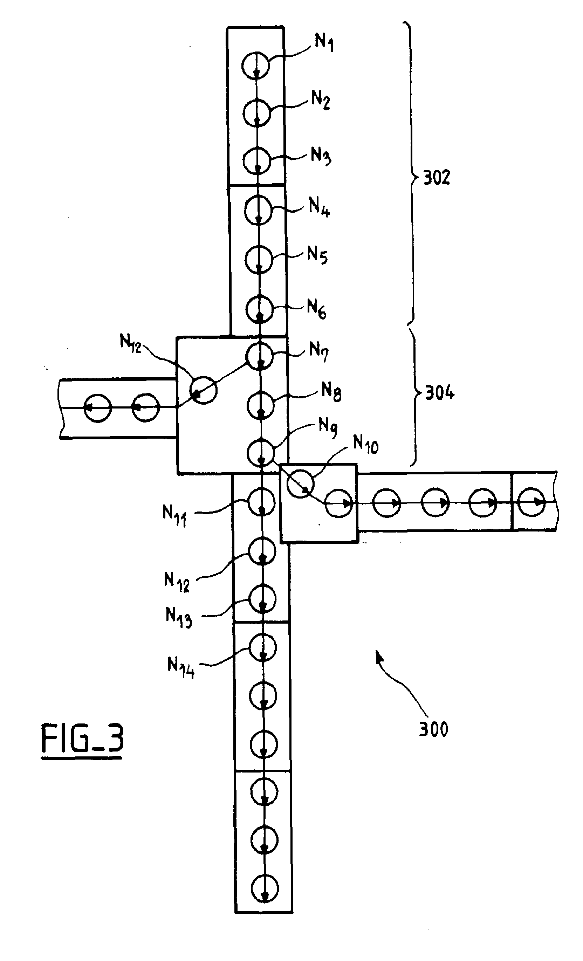

In accordance with the invention, the device 104 comprises means for coding a trajectory with the aid of a graph of successive nodes, described in detail later with the aid of Figure 3, with each node of the graph there being associated at least one two-dimensional source image and one transformation of this image to generate an image to be displayed.

In this embodiment, several users 106, 106' and 106" use the same device 104 to simulate various movements, identical or different, in this apartment.

Accordingly, this system 100 comprises means 108, 108' and 108" of control enabling each user 106, 106' and 106" to transmit to the device 104 commands relating to the movements that each user 106, 106' or 106" wishes to simulate in the apartment.

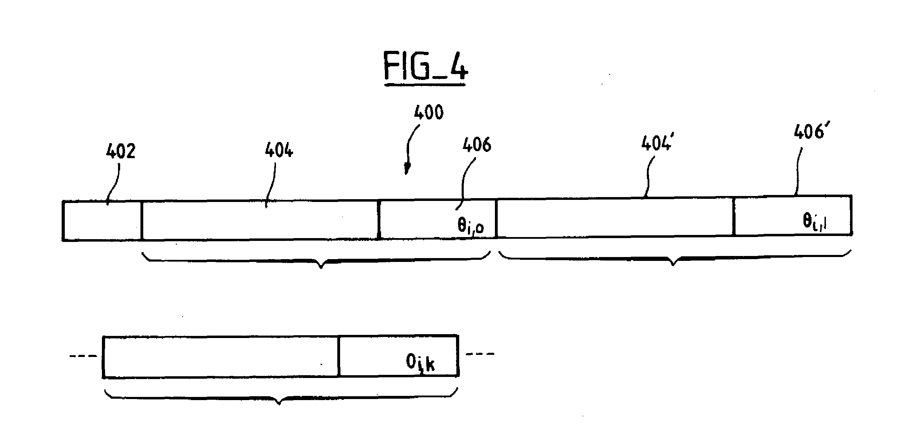

In response to these commands, the data transmitted by the device vary, as described subsequently with the aid of Figure 4, these data being transmitted to decoders 110, 110' and 110" processing the data to generate each image to be displayed.

Represented in Figure 3 is a graph 300 in accordance with the invention coding three possible trajectories with the aid of successive nodes $N_1$, $N_2$, $N_3$, ... $N_n$, each node $N_i$ corresponding to an image to be displayed, that is to say to a viewpoint of the coded scene.

Accordingly, the graph 300 is stored in the device 104 in such a way that one or more source images $I_s$, in two dimensions, and transformations $T_{s,i}$ specific to each source image are associated with each node $N_i$.

Subsequently, during simulations of the movements in the three-dimensional scene, the graph 300 is used to generate the images to be displayed according to two modes described hereinbelow:

- According to a first passive mode, the simulation of the movement is performed with a single possible trajectory in the three-dimensional scene. Such a mode corresponds, for example, to the part 302 of the graph 300 comprising nodes $N_1$ up to $N_6$.

In this case, the use of commands 108 by the user of the device allows the continuation, the stopping or the return of the simulated movement.

When the movement is continued, the source images $I_s$ associated with a node $N_i$ are transmitted in a successive manner from the device 104 to the generating means 110 so that the latter form the images to be transmitted to the screen 102.

In this embodiment of the invention, a source image $I_s$ is transmitted only when it is necessary for the generation of an image to be displayed.

Furthermore, the source images $I_s$ transmitted are stored by the decoders 110, 110' and 110" in such a way that they can be used again, that is to say to form a new image to be displayed, without requiring a new transmission.

Thus, the quantity of data transmitted for the simulation of the movement in the three-dimensional scene is reduced.

However, when a source image $I_s$ is no longer used to generate an image, this source image $I_s$ is deleted from the decoders and replaced by another source image $I_t$ used or more recently transmitted.

- According to a second interactive mode, the means 108, 108' and 108" of control and the device 104 communicate so as to choose the simulation of a movement from among a plurality of possible movements. Thus, the user chooses the display of a new viewpoint from among a choice of several possible new viewpoints.

Such a situation occurs when the graph 300 exhibits a plurality of nodes $N_8$ and $N_{12}$ (respectively $N_{10}$ and $N_{11}$) that are successive to one and the same earlier node $N_7$ (respectively $N_9$).

Specifically, this occurs when a movement may be made according to two concurrent trajectories starting from one and the same location.

In this case, the decoders 110, 110' and 110" comprise means for transmitting to the coder 104 a command indicating the choice of a trajectory.

To this end, it should be stressed that the navigation graph has previously been transmitted to the receiver which thus monitors the user's movements and sends the necessary requests to the server.

In passive or interactive navigation mode, a source image $I_s$ is represented in the form of a rectangular image, coding a texture, and of one or more binary masks indicating the pixels of this source image $I_s$ which, in order to form the image to be displayed, must be considered.

A polygon described by an ordered list of its vertices, defined by their two-dimensional coordinates in the image of the texture, can be used instead of the binary mask.

Furthermore, a polygon describing the useful part of the source image can be used to determine the zone of the image to be displayed which the source image will make it possible to reconstruct. The reconstruction of the image to be displayed on the basis of this source image is thus limited to the zone thus identified.

When a source image $I_s$ that is to be used by a decoder 110, 110' or 110" is not stored by the latter, its texture and its shape are transmitted by the coder whereas, for the subsequent viewpoints using this source image, only its shape and its transformation are transmitted.

Thus, the quantity of data transmitted between the coder 104 and the decoders 110, 110' and 110" is limited.

In fact, for each image to be displayed, indexed by i, the coder 104 transmits a list of the source images $I_s$ necessary for the construction of this image, for example in the form of reference numbers s identifying each source image $I_s$.

Furthermore, this list comprises the geometrical transformation $T_{s,i}$ associated with each source image $I_s$ for the image to be displayed i.

This list may be ordered from the most distant source image, that is to say generating a part of the image appearing as furthest away from the user, to the closest source image, that is to say generating the part of the image appearing as closest to the user, in such a way as to automatically perform the blanking out of a part of a remote source image by another close source image.

According to a variant of the invention, a binary mask is transmitted for each image to be displayed, this mask identifying for each pixel of the image to be displayed the source image $I_s$ on the basis of which it is to be constructed.

To summarize, to allow the generation of an image to be displayed, the following operations are performed:

- Firstly, the source images $I_s$ associated with an image to be displayed are identified by means of the list transmitted when the user wishes to move to a given viewpoint.

- Secondly, for each source image $I_s$, the convex polygon is projected onto the image to be displayed in such a way as to reduce the zone of the image to be scanned in the course of the reconstruction by starting from the most distant source image and going to the closest source image.

- Thirdly, for each pixel of the image to be displayed belonging to the identified zone, the geometrical transformation $T_{s,i}$ is applied so as to determine the address of the corresponding pixel in the source image $I_s$.

In this embodiment, the membership of a pixel in a source image $I_s$ is determined if this pixel is surrounded by four other pixels belonging to this source image, this characteristic being determined on the basis of information supplied by the mask.

In this case, the luminance and chrominance values of a pixel are calculated by bilinear interpolation by means of these surrounding points.

A pixel of the image to be displayed can be reconstructed successively on the basis of several source images, each new value of the pixel replacing the values previously calculated.

According to a variant of the invention, where the source images are arranged from the closest to the most distant image, each pixel can be constructed one after the other by considering all the source images identified in the list transmitted for the construction of the viewpoint associated with the node in which the user is situated.

In this case, the construction of a pixel stops when it has been possible to interpolate it on the basis of a source image.

In another variant, it is possible to reconstruct the image on the basis of each source image, by considering one source image after another, and by constructing a pixel unless it has already been constructed on the basis of a closer source image.

Finally, if, according to the third variant mentioned previously, a binary mask has been transmitted with the transformation associated with a viewpoint, steps 1 and 2 mentioned previously are deleted.

In the subsequent description, an application of the method is described which is particularly suited to the MPEG4 standard according to which a viewpoint is simulated with the aid of videos obtained by means of source images.

Accordingly, these videos are combined, in an order of use, in the display screen in accordance with the indications supplied by the node considered.

Such a method makes it possible to transmit the texture of a source image progressively as described precisely in the MPEG-4 video standard (cf. part 7.8 of the document ISO/IEC JTC 1/SC 29/WG 11 N 2502, pages 189 to 195).

The transmission of the data relating to each image displayed is then performed by means of successive binary trains 400 (Figure 4) in which the coding of an image is transmitted by transmitting information groups comprising indications 404 or 404' relating to a source image, such as its texture, and indications 406 or 406' relating to the transformations $T_{i,s}$ that are to be applied to the associated source image in order to generate the image to be displayed.

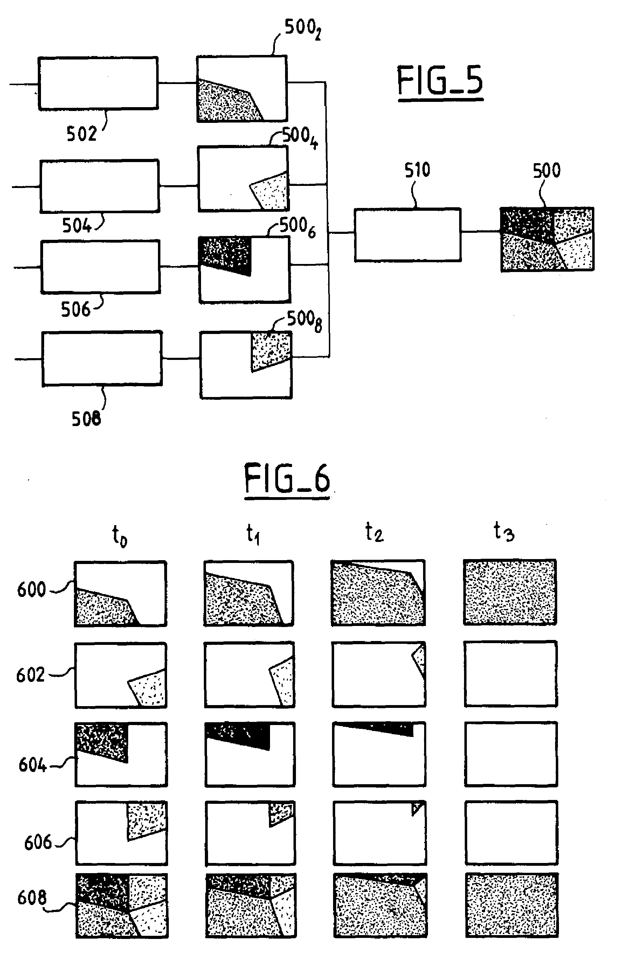

Such a transmission is used by the decoder to generate a part of an image to be displayed, as is described with the aid of Figure 5.

Represented in this Figure 5 are various binary trains 502, 504, 506 and 508 making it possible to generate various parts of an image 500 to be displayed by combining the various images $500_2$, $500_4$, $500_6$ and $500_8$ at the level of the display means 510.

Finally, represented in Figure 6 is the application of the image generation method described with the aid of Figure 5 within the framework of a video sequence such that a series of images 608, simulating a movement, is to be generated.

Accordingly, the various parts transmitted by binary trains 600, 602, 604 and 606 making it possible to generate an image to be displayed 608 are represented at various successive instants $t_0$, $t_1$, $t_2$ and $t_3$.

It is thus apparent that, by modifying the nature of the images coded by the various trains 600, 602, 604 and 606, the image to be displayed 6008 is modified in such a way as to simulate a movement.

As described previously, the invention makes it possible to simulate a movement in a scene, or an environment, in three dimensions by considering only two-dimensional data thus allowing the two-dimensional representation of navigation in a three-dimensional environment in a simple manner.

However, when the environment available is coded by means of three-dimensional tools, it is necessary to transform this three-dimensional coding into a two-dimensional coding in order to be able to use the system described above.

Therefore, described below is a method for synthesizing the smallest possible set of source images $I_s$ so as to associate the smallest possible list of images with each viewpoint of the trajectories adopted, and to define the simplest possible transformation $T_{s,i}$ which should be associated with source images in order to generate the viewpoint.

The predetermination of the navigation trajectories allows the construction of this two-dimensional representation. This simplification may be made at the cost of a loss of quality of the reconstructed images that it must be possible to monitor.

In order to perform this transformation of a three-dimensional representation into a two-dimensional representation, use is made of the knowledge of the predetermined trajectories in the three-dimensional scene and of the parameters such as the characteristics of the camera, in particular its orientation and its optic, through which the perception of the scene is simulated, and the viewpoints that may be required by the user are determined.

In this example of a transformation from a three-dimensional coding to a two-dimensional coding, this three-dimensional coding is considered to use N planar facets corresponding to N textures.

Each facet f is defined by a parameter set in three dimensions (X, Y, Z) consisting of the coordinates of the vertices of each facet and the two-dimensional coordinates of these vertices in the texture image.

Moreover, use is also made of parameters describing the position, the orientation and the optical parameters of the user in the three-dimensional scene.

For each viewpoint of the predetermined trajectories are determined the facets necessary for the reconstruction of the associated image by known perspective projection using the coordinates of the vertices of facets and the parameters mentioned above.

Finally, the information necessary for the reconstruction of the images corresponding to these viewpoints is determined: the texture images (which were associated with the facets selected) and for each of them the transformation making it possible to go from the coordinates of the image to be reconstructed to the coordinates of the texture image.

This transformation is described by a known two-dimensional planar projective equation also referred to as a homographic equation, and defined with the aid of a relation such as:

$$u2 = \frac{p11 \cdot u1 + p12 \cdot v1 + p13}{p31 \cdot u1 + p32 \cdot v1 + p33}$$

$$v2 = \frac{p21 \cdot u1 + p22 \cdot v1 + p23}{p31 \cdot u1 + p32 \cdot v1 + p33}$$

where the coefficients $p_{ii}$ result from a known combination of the parameters describing the plane of the facet and of the parameters of the viewpoint.

Such a transformation $T_{s,i}$ is therefore performed by a simple computation which makes it possible to dispense with a 3D (three-dimensional) graphical map.

It should be noted that $T_{s,i}$ is described by eight parameters $p_{ij}$ ($p_{33}$=1) which connect the coordinates of the pixels in the source image $I_s$ and in the image to be displayed.

Furthermore, the list of the facets necessary for the reconstruction of a viewpoint being thus predetermined, it is possible to establish a list of source images necessary for generating an image, the homographic transformation specific to each source image being associated with the latter.

To further reduce the complexity of the two-dimensional representation and hence the complexity of the synthesis of the images during navigation, it is possible to simplify the homographic transformation into an affine or linear transformation when the quality of the resulting image is acceptable.

Such is the case, for example, when a facet is parallel to the plane of the image or when the variation in distance of the vertices of the facet is small compared with the distance to the camera.

In the case of an affine projection, use can be made of a relation such as:

$$u_2 = p_{11} \cdot u_1 + p_{12} \cdot v_1 + p_{13}$$

$$v_2 = p_{21} \cdot u_1 + p_{22} \cdot v_1 + p_{23}$$

Whereas in the case of a linear projection, use can be made of a relation such as:

$$u_2 = p_{11} \cdot u_1 + p_{13}$$

$$v_2 = p_{22} \cdot v_1 + p_{23}$$

To summarize, the construction of a source image on the basis of a three-dimensional model can be effected in the following manner:

- For each viewpoint of the trajectory, the facets of the three-dimensional model are projected according to the viewpoint considered so as to compile the list of facets necessary for its reconstruction.

- For each facet identified, the homographic transformation which makes it possible to reconstruct the region of the image concerned on the basis of the texture of the facet is calculated. This transformation, consisting of eight parameters, is sufficient to perform the reconstruction since it makes it possible to calculate for each pixel of the image to be reconstructed its address in the corresponding texture image.

The description of the facet then reduces to the 2D coordinates in the texture image, and the facet becomes a source image.

- It is possible to verify thereafter whether the homographic model can be reduced to an affine model, by verifying that the error of 2D projection onto the texture image $\Delta E$ produced by setting $p_{31}$ and $p_{32}$ to 0 is less than a threshold $\psi$ over all the pixels concerned, or else over a minimum percentage.

- It is also possible to verify whether the affine model can be reduced to a linear model, by verifying that the error of 2D projection over the texture image $\Delta E$ produced by additionally setting $p_{12}$ and $p_{22}$ to 0 is less than a threshold $\psi$ over all the pixels concerned, or else over a minimum percentage.

An identification number s is associated with the source image generated as well as a geometrical transformation $T_{s,i}$ specific to the generation of an image displayed through this transformation.

To further reduce the complexity of the representation and to accelerate the displaying of a scene, it is beneficial to limit the number of source images to be considered. Accordingly, several facets can be grouped together in the generation of a source image.

Specifically, adjacent and noncoplanar facets may for example be merged into a single facet with no significant loss of quality provided that they are far from the viewpoint or that they are observed from a single position (with for example a virtual camera motion of pan type).

Such an application may be effected by considering the following operations:

- For each source image $I_s$ of the list associated with an image to be displayed, we determine each source image $I_{s'}$ of the list and adjacent to $I_s$ which may itself be integrated by verifying whether the error of two-dimensional projection $\Delta E_s(s')$ produced by applying the parameters of the source image $I_s$ to $I_{s'}$ is less than a threshold over all the pixels concerned, or else over a minimum percentage.

The entire set of possible groupings between adjacent source images and the corresponding integration costs are thus obtained.

- Then the source images are grouped together so as to minimize their number under the constraint of minimum error $\Delta E_s$ less than a threshold.

The grouping of source images is iterated until no further grouping is allowed, it then being possible for the set of source images obtained to be considered for the generation of this image to be displayed.

When the next image is considered, we take into account, firstly, the source images $I_s(i)$ which are present in the earlier image to be displayed as well as any groupings analogous to those performed in the earlier image.

The processing described previously is then iterated over the new group of source images.

With the aid of the error threshold on $\Delta E$, it is possible to determine whether these groupings should or should not be performed.

## Claims

1. Device (104) for coding two-dimensional images representing viewpoints of a three-dimensional virtual scene, a movement in this scene, simulated by the successive displaying of images, being limited according to predetermined trajectories, **characterized in that** it comprises means for coding a trajectory with the aid of a graph (300) of successive nodes ($N_i$) such that with each node ($N_i$) is associated at least one two-dimensional source image ($I_s$) and one transformation ($T_{i,s}$) of this image.

2. Device according to Claim 1, **characterized in that** it comprises means for coding an image to be displayed with the aid of a mask associated with a source image, for example a binary mask, and/or with the aid of polygons, the mask identifying for each pixel of the image to be displayed the source image ($I_s$) on the basis of which it is to be constructed.

3. Device according to Claim 2, **characterized in that** it comprises means for coding a list relating to the source images ($I_s$) and to the transformations ($T_{i,s}$) of these source images ($I_s$) for successive nodes in the form of a binary train (400).

4. Device according to Claim 3, **characterized in that** it comprises means for ordering in the list the source images ($I_s$) generating an image from the most distant, that is to say generating a part of the image appearing as furthest away from the user, to the closest source image ($I_s$), that is to say generating the part of the image appearing as closest to the user.

5. Device according to one of the preceding claims, **characterized in that** it comprises means for receiving a command determining a node ($N_i$) to be considered from among a plurality of nodes ($N_i$) when several trajectories, defined by these nodes, are possible.

6. Device according to one of the preceding claims, **characterized in that** it comprises means for generating the source images ($I_s$) according to a stream of video images of MPEG-4 type.

7. Device according to one of the preceding claims, **characterized in that** it comprises means for generating the source images ($I_s$) on the basis of a three-dimensional coding by projecting, with the aid of an affine and/or linear homographic relation, the three-dimensional coding onto the plane of the image to be displayed.

8. Device according to Claim 7, **characterized in that** it comprises means for considering the parameters of the camera simulating the shot.

9. Device according to Claim 7 or 8, **characterized in that** it comprises means for evaluating an error ($\Delta E$) of projection of the three-dimensional coding in such a way that the linear (respectively affine) projection is performed when the deviation between this projection and the affine (respectively homographic) projection is less than this error ($\Delta E$).

10. Device according to one of Claims 7, 8 or 9, **characterized in that** it comprises means for grouping together the source images generated by determining, for each source image ($I_s$) associated with an image to be displayed, the adjacent source images ($I_{s,i-1}$; $I_{s,i+1}$) which may be integrated with it by verifying whether the error ($\Delta E_i$) produced by applying the parameters of the source image ($I_s$) to these adjacent images is less than a threshold over all the pixels concerned, or else over a minimum percentage.

11. System for simulating movements in a three-dimensional virtual scene comprising an image display device, this system comprising a display screen (102) and control means (108) allowing a user to control a movement according to a trajectory from among a limited plurality of predefined trajectories, **characterized in that** it comprises a device (104) according to one of the preceding claims.

12. System according to Claim 11, **characterized in that** it comprises means for automatically performing the blanking out of a part of a source image that is remote with respect to the user with another closer source image.

13. System according to Claim 11 or 12, **characterized in that** it comprises means for generating a pixel of the image to be displayed in a successive manner on the basis of several source images, each new value of the pixel replacing the values previously calculated.

14. Method of simulating movements in a three-dimensional virtual scene using an image display device (104), a display screen (102) and control means (108) allowing a user to control a movement according to a trajectory from among a limited plurality of predefined trajectories, **characterized in that** it comprises a device according to one of Claims 1 to 10.

FIG_1

FIG_2

EP 1 496 476 A1

FIG_3

EP 1 496 476 A1

## FIG_4

FIG_5

FIG_6

**European Patent Office**

**EUROPEAN SEARCH REPORT**

Application Number

EP 04 10 2739

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DARSA L ET AL: "Walkthroughs of complex environments using image-based simplification"<br>COMPUTERS AND GRAPHICS, PERGAMON PRESS LTD. OXFORD, GB,<br>vol. 22, no. 1,<br>25 February 1998 (1998-02-25), pages 55-69, XP004123426<br>ISSN: 0097-8493<br>* page 57, right-hand column, line 5 - page 58, right-hand column, line 4 * | 1,11,14 | G06T15/20 |
| A | YAN-FAI CHAN ET AL: "A panoramic-based walkthrough system using real photos"<br>COMPUTER GRAPHICS AND APPLICATIONS, 1999. PROCEEDINGS. SEVENTH PACIFIC CONFERENCE ON SEOUL, SOUTH KOREA 5-7 OCT. 1999, LOS ALAMITOS, CA, USA,IEEE COMPUT. SOC, US,<br>5 October 1999 (1999-10-05), pages 231-240,328, XP010359469<br>ISBN: 0-7695-0293-8<br>* abstract *<br>* paragraphes 2 et 5 * | 1-14 | |
| A | ZAGORODNOV V ET AL: "Data rate smoothing in interactive walkthrough applications using 2D prefetching"<br>PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY: IEEE, US,<br>vol. 2 OF 3,<br>22 September 2002 (2002-09-22), pages 201-204, XP010607689<br>ISBN: 0-7803-7622-6<br>* the whole document * | 1-14 | |

TECHNICAL FIELDS SEARCHED (Int.Cl.7)

G06T

The present search report has been drawn up for all claims

| Place of search | Date of completion of the search | Examiner |
|---|---|---|
| Munich | 11 October 2004 | Zamuner, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)